# EUROPEAN PATENT SPECIFICATION

(11) **EP 2 639 747 B1**
(45) Date of publication and mention of the grant of the patent: **04.10.2017**
(21) Application number: 13159428.5
(22) Date of filing: 15.03.2013
(51) Int. Cl.: G06K 9/72

(54) **Address recognition apparatus and address recognition system**
Adresserkennungsvorrichtung und Adresserkennungssystem
Appareil de reconnaissance d'adresse et système de reconnaissance d'adresse

(30) Priority: 15.03.2012 JP 2012059325
(43) Date of publication of application: 18.09.2013
(73) Proprietor: Kabushiki Kaisha Toshiba, Tokyo 105-8001 (JP)
(72) Inventor: Maeda, Masaya, Tokyo, 105-8001 (JP); Hamamura, Tomoyuki, Tokyo, 105-8001 (JP); Piao, Ying, Tokyo, 105-8001 (JP); Irie, Bunpei, Tokyo, 105-8001 (JP)
(74) Representative: Hoffmann Eitle

(56) References cited:
- EP-A1- 1 196 252
- JP-A- H11 235 554

## Description

### FIELD

Embodiments described herein relate generally to an electronic apparatus and an address recognition system.

### BACKGROUND

Conventionally, a sorting apparatus which performs a process of sorting delivery objects, such as postal parcels and home delivery parcels, has been put into practice. A sorting apparatus as described comprises an address recognition apparatus which recognizes addresses written on delivery objects. The sorting apparatus sorts delivery objects based on a recognition result of addresses.

There is a high possibility that both of a sender address and an address of a delivery destination are both written on each of delivery objects. A conventional address recognition apparatus may therefore recognize the sender address and the address of the delivery destination mistaken from each other. As a result, there is a problem that a delivery object may miscarry.

The invention is hence directed to providing an address recognition apparatus and an address recognition system which can recognize an address of a delivery destination with high accuracy.

### BRIEF DESCRIPTION OF THE DRAWINGS

FIG. 1 is an exemplary view for explaining a address recognition system according to an embodiment.
FIG. 2 is an exemplary view for explaining the address recognition system according to the embodiment.
FIG. 3 is an exemplary view for explaining the address recognition system according to the embodiment.
FIG. 4 is an exemplary view for explaining the address recognition system according to the embodiment.
FIG. 5 is an exemplary view for explaining the address recognition system according to the embodiment.
FIG. 6 is an exemplary view for explaining the address recognition system according to the embodiment.
FIG. 7 is an exemplary view for explaining the address recognition system according to the embodiment.
FIG. 8 is an exemplary view for explaining the address recognition system according to the embodiment.

### DETAILED DESCRIPTION

In general, according to one embodiment, an address recognition apparatus, comprises, an identification-data obtaining module configured to obtain identification data from a deliverable object, a search module configured to search a server connected via a network for location data indicating a location where the deliverable object is received, based on the identification data obtained by the identification-data obtaining module, a correction-coefficient memory module configured to store the location data and a correction coefficient associated with each other, a correction-coefficient change module configured to change the correction coefficient in the correction-coefficient memory module, which is associated with the location data searched for by the search module, an image obtaining module configured to obtain an image from the deliverable object, an evaluation-value calculation module configured to calculate an uncorrected evaluation value for each item of the location data, based on the image, an evaluation-value correction module configured to correct the uncorrected evaluation value with the correction coefficient, and calculate a corrected evaluation value, and a recognition module configured to recognize an address of a delivery destination of the deliverable object, based on the corrected evaluation value.

Hereinafter, an address recognition apparatus and an address recognition system according to an embodiment will be described with reference to the drawings.

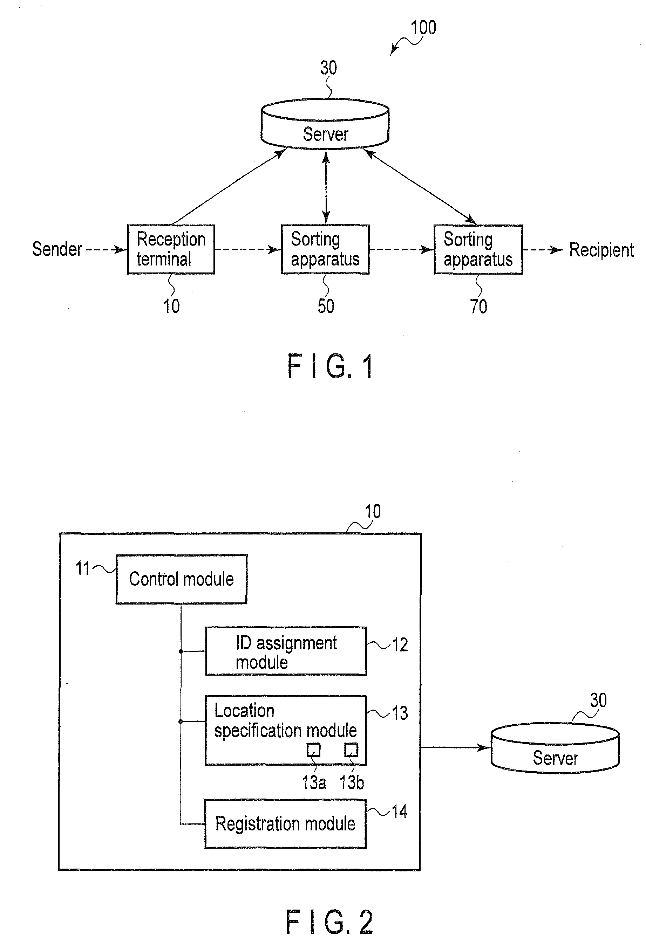

FIG. 1 shows an example configuration of an address recognition system 100. The address recognition system 100 comprises a reception terminal 10, a server 30, a sorting apparatus 50, and a sorting apparatus 70.

The reception terminal 10 is a terminal possessed by a person in charge who collects delivery objects. The person in charge receives a delivery object from a sender. The reception terminal 10 reads identification data written on a slip stuck on the delivery object and performs various processings. The reception terminal 10 may be configured to print identification data onto a medium such as a seal and to publish the medium if no slip is stuck on the delivery object. The reception terminal 10 generates registration data in accordance with operation of the person in charge.

The server 30 is a server machine connected to the reception terminal 10, sorting apparatus 50, and sorting apparatus 70 via a network. The server 30 comprises a storage apparatus which stores registration data generated by the reception terminal 10. Also, the server 30 distributes the registration data in accordance with a demand from the sorting apparatus 50 or 70.

The sorting apparatus 50 is installed in each of collection-and-delivery centers (first collection-and-delivery stations) for delivery objects. The sorting apparatus 50 reads addresses written on delivery objects collected, and sorts the delivery objects accordingly. The delivery objects sorted by the sorting apparatus 50 are transported to collection-and-delivery centers (second collection and delivery stations) according to addresses of delivery destinations.

The sorting apparatus 70 is installed in each of the collection-and-delivery centers (second collection-and-delivery stations) for delivery objects. The sorting apparatus 70 has the same configuration as the sorting apparatus 50. The delivery objects sorted by the sorting apparatus 70 are delivered to recipients at the addresses of delivery destinations.

FIG. 2 shows an example of the reception terminal 10. As described above, the reception terminal 10 registers items (delivery objects) which are carried into parcel collection points by senders.

The reception terminal 10 comprises a control module 11, an ID assignment module 12, a location specification module 13, and a registration module 14.

The control module 11 totally controls operation of each of modules of the reception terminal 10. The control module 11 comprises a CPU, a buffer memory, a program memory, and nonvolatile memory. The CPU performs various data processings. The buffer memory temporarily stores results of calculations performed by the CPU. The program memory and nonvolatile memory store various programs and control data which are performed by the CPU. The control module 11 can perform various processings by causing the CPU to execute the programs stored in the program memory.

The ID assignment module 12 generates ID (identification data) for each of delivery objects which are carried into a parcel collection point. Any type of identification data can be used insofar as the identification data can specify a delivery object as a target. For example, the ID assignment module 12 may be configured to read a slip number of a slip stuck on each of the delivery objects and to use the read slip number as identification data. The ID assignment module 12 may be configured to print identification data onto a medium, such as a seal, and to publish the medium if no slip is stuck on a delivery object.

The location specification module 13 generates data (location data) indicating a parcel collection point of a delivery object for which identification data has been generated. For example, the location specification module 13 may be configured to generate location data by a function of a GPS. In this case, the location specification module 13 generates coordinates data by means of the GPS. The location specification module 13 generates a specific location data by referring to a table in which coordinate data and location data are associated with each other in advance.

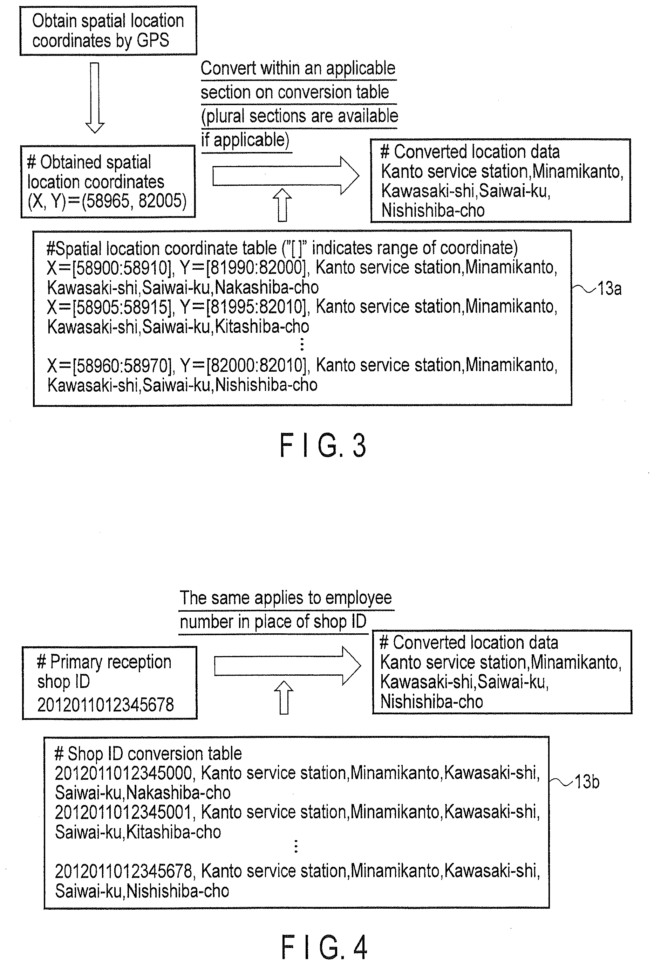

FIG. 3 shows an example of a processing of converting coordinate data into location data. As shown in FIG. 3, the location specification module 13 comprises a memory 13a which stores the table in which coordinate data and location data are associated with each other. The location specification module 13 reads location data associated with coordinates data by referring to the table stored in the memory 13a.

The location specification module 13 may be configured to generate location data, based on setup data which is preset for each of the parcel collection points where delivery objects are collected. For example, the location specification module 13 generates ID of shops which are parcel collection points, according to operation by a person in charge. The location specification module 13 generates specific location data by referring to a table in which shop ID and location data are associated with each other in advance.

FIG. 4 shows an example of a processing of converting shop ID into location ID. As shown in FIG. 4, the location specification module 13 comprises a memory 13b which stores the table in which shop ID and location ID are associated with each other. The location specification module 13 reads position data associated with shop ID by referring to the table stored in the memory 13a.

Further, if a person in charge directly collects a delivery object and if a responsible area is assigned to the person in advance, the location specification module 13 may be configured to generate location data, based on a number assigned uniquely to the person in charge of collection. Alternatively, the location specification module 13 may be configured to generate location data, based on data which has been added as unique data to the reception terminal 10.

The location data may be set up on a table by classification of resolving a responsible area into detailed areas or resolving a responsible area into large areas, as shown in FIG. 3 and FIG. 4. Thus, the reception terminal 10 can perform various adjustments according to an operation plan by associating location data and various types of data with each other.

The registration module 14 performs a processing of registering identification data and location data into the server 30, for each of delivery objects. That is, the registration module 14 associates identification data generated by the ID assignment module 12 with location data generated by the location specification module 13, and transmits the data associated with each other as registration data to the server 30. The server 30 stores, as a database, the registration data transmitted from the reception terminal 10.

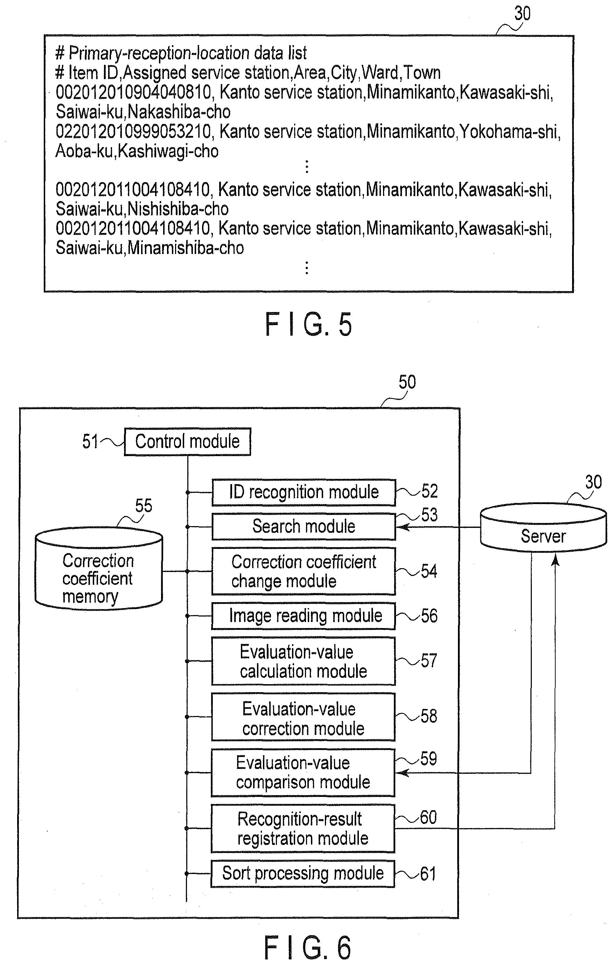

FIG. 5 shows an example of registration data stored in the server. As shown in FIG. 5, the server 30 stores identification data (item ID) associated with location data (e.g., assigned service station, an area, a city, a ward, and a town). The server 30 distributes registration data for each item of identification data in accordance with a request from the sorting apparatus 50 or 70.

In actual operation, a coded list requires a less volume and can be easily accessed from programs. Therefore, actual character sequences expressing assigned service stations may be coded in the list.

For example, the registration module 14 transmits registration data to the server 30 together with a fee payment status and a reception status of a delivery object, at the time of delivery of the delivery object. The registration module 14 may be configured to transmit the fee payment status and the reception status of a delivery object to another server. In this case, the registration module 14 transmits data to the server in a manner that the registration data is linked with the charge payment status and the reception status of the delivery object.

The method of connecting a delivery object with identification data is not limited to the method described above of sticking, onto the delivery object, a seal on which a slip number or identification data is printed but any method is available. For example, an electronic wireless tag which stores identification data may be attached to a delivery object. Alternatively, a one-dimensional bar code or a two-dimensional bar code including identification data may be printed and stuck onto a delivery object. That is, any method is available insofar as the method is capable of reading original identification data from a delivery object.

Delivery objects as targets subjected to the sorting are transported to a collection-and-delivery center (first collection-and-delivery station) by a delivery contractor after completion of a reception processing. As described above, the sorting apparatus 50 is installed in the first collection-and-delivery station.

FIG. 6 shows an example of the sorting apparatus 50. As described above, the sorting apparatus 50 sorts the delivery objects which have been subjected to the reception process, depending on delivery destinations. The delivery objects subjected to the sort processing are transported to collection-and-delivery centers (second collection-and-delivery stations) for delivery objects by a delivery contractor.

The sorting apparatus 50 comprises a control module 51, an ID recognition module 52, a search module 53, a correction-coefficient change module 54, a correction coefficient memory 55, an image reading module 56, an evaluation-value calculation module 57, an evaluation-value correction module 58, an evaluation-value comparison module 59, a recognition-result registration module 60, and a sort processing module 61.

The control module 51 totally controls operation of each of modules of the sorting apparatus 10. The control module 51 comprises a CPU, a buffer memory, a program memory, and a nonvolatile memory. The CPU performs various data processings. The buffer memory temporarily stores results of calculations performed by the CPU. The program memory and nonvolatile memory store various programs which are performed by the CPU, and control data. The control module 51 can perform various processings by causing the CPU to execute the programs stored in the program memory.

The ID recognition module 52 obtains identification data from delivery objects. For example, if a slip number is used as identification data, the ID recognition module 52 recognizes identification data by optically reading the slip number or a bar code corresponding to the slip number. If a seal where identification data is printed is stuck on a delivery object, the ID recognition module 52 recognizes identification data by optically reading the seal. If an electronic tag which stores identification data is given to a delivery object, the ID recognition module 52 recognizes the identification data by optically reading the electronic tag with a wireless reader.

The search module 53 searches the server 30 for registration data corresponding to the identification data obtained by the ID recognition module 52. That is, the search module 53 transmits identification data and a request to the server 30. The server 30 reads registration data including received identification data, and responds with the registration data to the sorting apparatus 50. In this manner, the search module 53 can obtain the registration data corresponding to the identification data obtained from the delivery object.

To save time which may be wasted by making communication with the server 30 each time a delivery object is processed, the sorting apparatus 50 may be configured to download a list of registration data in advance from the server 30 when sorting is started for a plurality of delivery objects. In this case, the sorting apparatus 50 can search for registration data in a local environment. If registration data of all delivery objects is obtained, the data volume can be large. Therefore, the sorting apparatus 50 may be configured to download, from the server 30 in advance, registration data in which items of assigned service stations in the registration data of the server 30 correspond to collection-and-delivery centers in each of which the sorting apparatus 50 is installed.

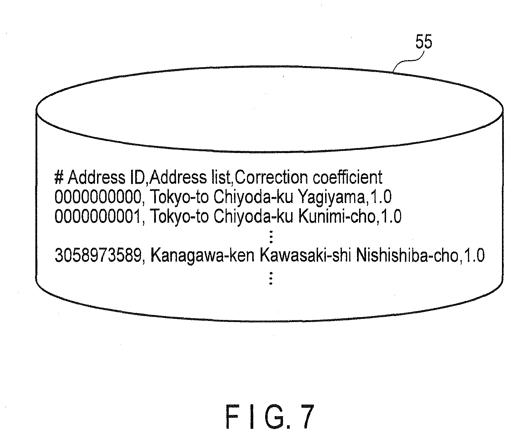

The correction-coefficient change module 54 performs a processing of changing a correction coefficient for each area, in accordance with obtained registration data. The correction coefficient memory 55 is a memory which stores the correction coefficient for each area. The correction coefficient memory 55 stores, for example, address ID, address lists, and correction coefficients which are associated with each other, as shown in FIG. 7. The correction coefficients are supposed to be 1.0 in a standard state.

The correction-coefficient change module 54 changes the correction coefficients stored in the correction coefficient memory 55 by using location data of the registration data obtained by the search module 53. That is, the correction-coefficient change module 54 changes the correction coefficient stored in the correction coefficient memory 55 by using location data at the time of receiving a delivery object.

Assuming that there is a low possibility of delivering a delivery object from an area where the delivery object is received, to the same area as the former area, the correction-coefficient change module 54 sets a lower correction coefficient for an area corresponding to location data at the time of reception in comparison with a standard correction coefficient.

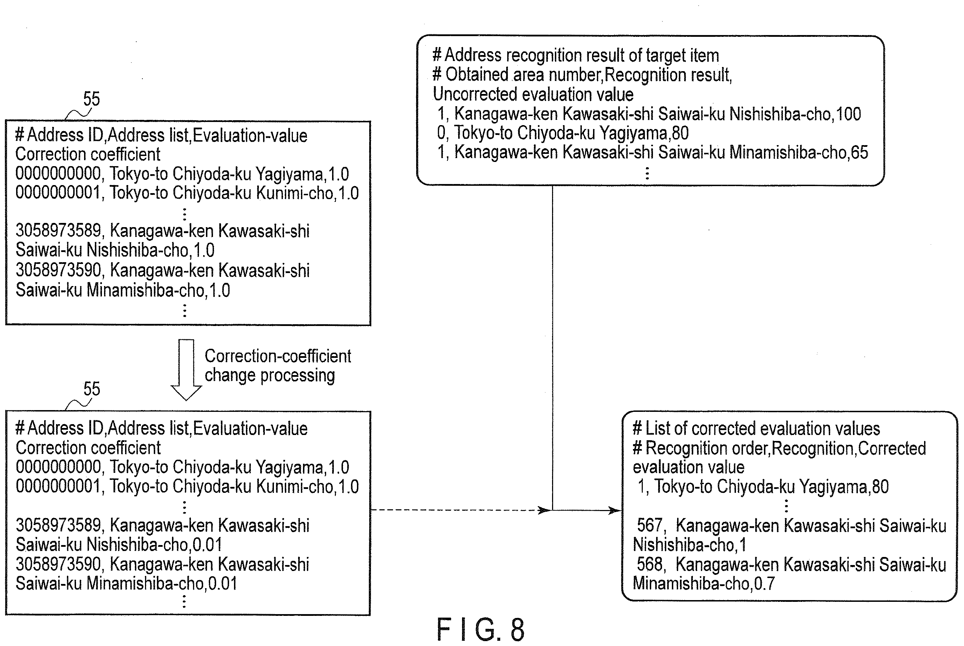

For example, as shown in FIG. 8, consideration will now be taken into a case that location data at the time of receiving a delivery object describes "Assigned service station: Kanto service station", "Area: Minamikanto", "City: Kawasaki", "Ward: Saiwai-ku", and "Town: Nishishiba-cho". In this case, the correction-coefficient change module 54 sets a lower correction coefficient for an applicable candidate in the correction coefficient memory 55 in comparison with the standard correction coefficient.

In this manner, when a plurality of sender addresses and/or addresses of delivery destination are extracted in a later processing, evaluation values of addresses of senders are lowered as a result. In this manner, the sorting apparatus 50 can correctly recognize delivery destinations. In addition, a reduction rate for correction coefficients is set within a present range. For example, if a correction coefficient for an area which corresponds to location data at the time of reception is lowered at the greatest reduction rate, the sorting apparatus 50 falls into a situation of not perfectly recognizing the area corresponding to the location data at the time of reception, as an address of a delivery destination.

The image reading module 56 reads images from delivery objects. The image reading module 56 comprises, for example, an illumination and an optical sensor. The illumination irradiates a delivery object with light. The optical sensor comprises a photo detector, such as a Charge Coupled Device (CCD), and an optical system (lens). The optical sensor receives reflection light reflected from the delivery object, and forms an image thereof on the CCD, thereby obtaining an electrical signal (image). The image reading module 56 can obtain an image of a region where an address of a delivery object is written, by obtaining an image according to reflection light of light irradiated on the delivery object.

The evaluation-value calculation module 57 recognizes an address, based on an image of a region in which an address of a delivery object is written, obtained by the image reading module 56. For example, the evaluation-value calculation module 57 extracts address line candidates to specify written positions of addresses on a delivery object. In an obtained multivalued image, the evaluation-value calculation module 57 creates a differential binary image by setting 1 for each module part which has a predetermined difference or more in luminance value between adjacent pixels and by setting 0 for each module part which does not. The evaluation-value calculation module 57 connects module parts which are set to 1 in the differential binary image, thereby to create differentiation labels. The evaluation-value calculation module 57 creates address line candidates by integrating the differential labels, based on mutual positional relationships between each other of the differentiation labels. The evaluation-value calculation module 57 verifies sizes and arrangement of the labels and registers detected line candidates which satisfy conditions.

Next, the evaluation-value calculation module 57 creates an address region candidate, by referring to positional relationships between each other among a plurality of registered address line candidates from the image. That is, the address region candidate includes at least one address line candidate.

Subsequently, the evaluation-value calculation module 57 matches the plurality of extracted address region candidates with an address database. An address database has the same configuration as address ID and the address lists which are stored in the correction coefficient memory 55. In this manner, the evaluation-value calculation module 57 can calculate an evaluation value for each of the lists in the address database.

The evaluation-value correction module 58 calculates a corrected evaluation value by correcting an uncorrected evaluation value calculated by the evaluation-value calculation module 57 with use of a correction coefficient stored in the correction coefficient memory 55. The evaluation-value correction module 58 calculates a corrected evaluation value by multiplying or adding the uncorrected evaluation value calculated for a list (area) and a correction coefficient for the same area. As described above, the correction coefficient for the area where a delivery object has been received is set to be lower. In this manner, the sorting apparatus 50 can lower a corrected evaluation value for a reception area.

If a reception area is "Kawasaki-shi Saiwai-ku Nishishiba-cho", the correction-coefficient change module 54 sets the lower correction coefficient associated with "Kawasaki-shi Saiwai-ku Nishishiba-cho" to be lower in the correction coefficient memory 55. For example, as shown in FIG. 8, an uncorrected evaluation value for an area "Kawasaki-shi Saiwai-ku Nishishiba-cho" is supposed to be "100", and an uncorrected evaluation value for an area "Tokyo-to Chiyoda-ku Yagiyama" is supposed to be "80". Also, a correction coefficient for the area "Kawasaki-shi Saiwai-ku Nishishiba-cho" is supposed to be "0.01", and a correction coefficient for the area "Tokyo-to Chiyoda-ku Yagiyama" is supposed to be "1.0". In this case, a corrected evaluation value for the area " Kawasaki-shi Saiwai-ku Nishishiba-cho" is "1", and a corrected evaluation value for the area "Tokyo-to Chiyoda-ku Yagiyama" is "80".

Thus, the corrected evaluation value of an address recognition result on the side of a sender can be corrected to be lower by setting a lower correction coefficient in accordance with location data at the time of reception.

The evaluation-value comparison module 59 performs comparison of a plurality of corrected evaluation values corrected by the evaluation value correction module 58. The evaluation-value comparison module 59 specifies an address of a delivery destination, based on a result of the comparison. For example, the evaluation-value comparison module 59 obtains an aiming address recognition result by employing a candidate from which the highest value is calculated.

The recognition-result registration module 60 performs a recognition-result registration processing of registering a recognition result of an address into the server 30. The recognition-result registration module 60 transmits a recognition result of the evaluation-value comparison module 59 to the server 30 if recognition of an address of a delivery destination is completed by the evaluation-value comparison module 59. In this manner, the sorting apparatus 50 can prevent each delivery object from being subjected to the recognition processing again by a sorting apparatus installed in any other collection-and-delivery center. Further, the recognition-result registration module 60 may be configured to stick a seal onto a delivery object, wherein a bar code into which a recognition result of an address of a delivery destination is coded is printed on the seal.

The control module 51 also resets the value of a correction coefficient stored in the correction coefficient memory 55 to a standard value each time when recognition of an address is completed for a delivery object.

The sort processing module 61 sorts delivery objects, based on recognition results of addresses of delivery destinations. For example, the sort processing module 61 comprises a conveyor path through which delivery objects are conveyed, a plurality of stockrooms in which a plurality of delivery objects are stocked, sorted depending on areas, and a plurality of gates which branch the conveyor path to the plurality of stockrooms. The sort processing module 61 transports delivery objects to the stockrooms, depending on areas as delivery destinations by controlling the gates, based on recognition results of addresses of delivery destinations. In this manner, delivery objects are sorted for each of areas of delivery destinations.

Further, the sorting apparatus 70 installed in a second collection-and-delivery station may be configured to obtain recognition results of addresses of delivery destinations from the server 30. As described above, the sorting apparatus 50 installed in a first collection-and-delivery station transmits addresses of delivery destinations to the server 30. In this manner, the server 30 can store ID of delivery objects associated with addresses of delivery destinations. The sorting apparatus 70 installed in the second collection-and-delivery station can obtain, from the server 30, an address of a delivery destination recognized by another sorting apparatus, according to identification data obtained from a delivery object.

If an address of a delivery destination recognized by another sorting apparatus is printed as a bar code or a two-dimensional code, the sorting apparatus 70 can obtain the address of the delivery destination by reading the bar code or two-dimensional code.

As described above, the address recognition system 100 registers, into a server, data indicating a reception area by the reception terminal 10 for each delivery object. The sorting apparatus 50 recognizes the reception area registered in the server, and sets a correction coefficient for the reception area to be lower in comparison with a correction coefficient for another area. The sorting apparatus then performs recognition processing.

In this manner, a possibility of recognizing a reception area as an area of a delivery destination can be suppressed. Accordingly, the sorting apparatus 50 can prevent an address of a sender from being mistaken for an address of a delivery destination. As a result, according to the invention, there is provided an address recognition apparatus and an address recognition system, which can recognize an address of a delivery destination with high accuracy.

Further, the address recognition system 100 can register a detailed address of a sender (e.g., a city block, a building name, a company name, and a personal name) from a recognition result of an address, and can create a detailed customer database. The address recognition system 100 can also take statistics of items carried into by the customer. For example, since reception location data is registered in the server 30, the address recognition system 100 can obtain data up to a level of town names by communicating with the server 30.

However, the server 30 is assumed to be accessed from parcel collection points in all areas of the nation. Therefore, registering and maintaining company names and personal names for each of all delivery objects are not practical in view of a data volume and variations. In this case, important ability is to correctly recognize senders rather than delivery destinations.

In order to recognize an address of a sender correctly, the correction-coefficient change module 54 sets, for example, a greater correction coefficient for an area according to registration data in comparison with a standard correction coefficient. In this manner, even when a plurality of addresses are extracted including an address of a sender and another address, the sorting apparatus 50 can correctly recognize an address on the side of the sender since the correction coefficient for the address of the sender is greater.

For example, if a sender is recognized by a parcel collection point (sorting station) on the sending side of a delivery object, the sorting apparatus 50 needs only to comprise an address database including detailed data, including town blocks, building names, company names, and personal names in an area for which the sorting station is responsible. That is, the sorting apparatus 50 does not need to comprise detailed address database over the national area, and can therefore achieve more easily the configuration as described above in comparison with a method of registering detailed addresses throughout the nation into the server 30.

## Claims

1. An address recognition apparatus, **characterized by** comprising:
an identification-data obtaining module (52) configured to obtain identification data from a deliverable object;
a search module (53) configured to search a server connected via a network or in a local environment for location data indicating a location where the deliverable object is received, based on the identification data obtained by the identification-data obtaining module, the location data being associated with identification data as registration data;
a correction-coefficient memory module (55) configured to store a correction coefficient for an area associated with the location data;
a correction-coefficient change module (54) configured to decrease the correction coefficient in the correction-coefficient memory module, which is associated with the location data where the deliverable object is received;
an image obtaining module (56) configured to obtain an image of a region in which an address is written from the deliverable object;
an evaluation-value calculation module (57) configured to extract address line candidates from the image and to match a plurality of extracted address region candidates with an address database, hereby calculating an evaluation value for each candidate address;
an evaluation-value correction module (58) configured to correct the evaluation values with correction coefficients, and calculate corrected evaluation values by multiplying or adding the evaluation values with the correction coefficients for the area of the obtained addresses; and
a recognition module (59) configured to recognize an address of a delivery destination of the deliverable object, based on the corrected evaluation values corrected by the evaluation-value correction module.

2. An address recognition system **characterized by** comprising a reception terminal (10) and the address recognition apparatus (50) according to one of Claim 1, wherein
the reception terminal comprises:
an identification-data generation module (12) configured to generate identification data for each deliverable object;
a location-data generation module (13) configured to generate location data indicating an area where the deliverable object was received; and
a registration module (14) configured to register, in a server connected via a network, the identification data generated by the identification-data generation module and the location data generated by the position-data generation module, with the identification data and the location data associated with each other.

3. The address recognition system according to Claim 2, **characterized in that** the location-data generation module obtains spatial coordinate data by a GPS.

4. The address recognition system according to Claim 3, **characterized in that** the location-data generation module comprises a memory (13a) storing a table in which the coordinate data and location data indicating an area, and reads the location data corresponding to the coordinate data obtained by the GPS from the table.

5. The address recognition system according to Claim 2, **characterized in that** the location-data generation module generates data indicating a shop at a reception point of the deliverable object, in accordance with an operation input.

6. The address recognition system according to Claim 5, **characterized in that** the location-data generation module comprises a memory (13b) storing a table in which data indicating the shop and location data indicating an area are associated with each other, and reads the location data corresponding to the data indicating the shop from the table.

7. An address recognition system according to Claim 2, **characterized in that**
the identification-data generation module converts the generated identification data into a one-dimensional or two-dimensional code, and prints the converted code, and
the identification-data obtaining module reads the printed code, and obtains the identification data of the deliverable object.

8. An address recognition system according to Claim 2, **characterized in that**
the identification-data generation module stores the generated identification data into an electronic tag, and
the identification-data obtaining module reads the electronic tag, and obtains the identification data of the deliverable object.

## Patentansprüche

1. Adressenerkennungsvorrichtung, **dadurch gekennzeichnet, dass** sie umfasst:
ein Identifikationsdaten-Erhaltungsmodul (52), konfiguriert, um Identifikationsdaten von einem lieferbaren Objekt zu erhalten;
ein Suchmodul (53), konfiguriert, um einen Server zu suchen, der über ein Netzwerk verbunden ist oder in einer lokalen Umgebung für Ortsdaten, die einen Ort angeben, wo das lieferbare Objekt empfangen wird, basierend auf den Identifikationsdaten, die durch das Identifikationsdaten-Erhaltungsmodul erhalten wurden, wobei die Ortsdaten mit Identifikationsdaten als Registrierungsdaten assoziiert sind;
ein Korrekturkoeffizient-Speichermodul (55), konfiguriert, um einen Korrekturkoeffizienten für einen Bereich, der mit den Ortsdaten assoziiert ist, zu speichern;
ein Korrekturkoeffizient-Änderungsmodul (54), konfiguriert, um den Korrekturkoeffizienten in dem Korrekturkoeffizient-Speichermodul zu verringern, welches mit den Ortsdaten, wo das lieferbare Objekt erhalten wird, assoziiert ist;
ein Bilderhaltungsmodul (56), konfiguriert, um ein Bild eines Bereichs, in welchem eine Adresse von dem lieferbaren Objekt geschrieben ist, zu erhalten;
ein Bewertungswert-Berechnungsmodul (57), konfiguriert, um die Adresslinienkandidaten von dem Bild zu extrahieren und eine Vielzahl von extrahierten Adressbereichskandidaten mit einer Adressendatenbank anzupassen, wobei hierdurch ein Bewertungswert für jeden Adresskandidaten berechnet wird;
ein Bewertungswert-Korrekturmodul (58), konfiguriert, um die Bewertungswerte mit Korrekturkoeffizienten zu korrigieren, und korrigierte Bewertungswerte zu berechnen, indem die Bewertungswerte mit den Korrekturkoeffizienten für den Bereich der erhaltenen Adressen multipliziert oder addiert werden; und
ein Erkennungsmodul (59), konfiguriert, um eine Adresse eines Lieferungsziels des lieferbaren Objekts, basierend auf den von dem Bewertungswert-Korrekturmodul korrigierten Bewertungswerten, zu erkennen.

2. Adressenerkennungssystem, **dadurch gekennzeichnet, dass** es einen Empfangsterminal (10) und die Adressenerkennungsvorrichtung (50) nach Anspruch 1 umfasst, wobei der Empfangsterminal umfasst:
ein Identifikationsdaten-Erzeugungsmodul (12), konfiguriert, um Identifikationsdaten für jedes lieferbare Objekt zu erzeugen;
ein Ortsdaten-Erzeugungsmodul (13), konfiguriert, um Ortsdaten, die einen Bereich angeben, wo das lieferbare Objekt erhalten wurde, zu erzeugen; und
ein Registrierungsmodul (14), konfiguriert, um in einem Server, der über ein Netzwerk verbunden ist, die von dem Identifikationsdaten-Erzeugungsmodul erzeugten Identifikationsdaten und die von dem Ortsdaten-Erzeugungsmodul erzeugten Ortsdaten zu registrieren, wobei die Identifikationsdaten und die Ortsdaten miteinander assoziiert sind.

3. Adressenerkennungssystem nach Anspruch 2, **dadurch gekennzeichnet, dass** das Ortsdaten-Erkennungsmodul über GPS räumliche Koordinatendaten erhält.

4. Adressenerkennungssystem nach Anspruch 3, **dadurch gekennzeichnet, dass** das Ortsdaten-Erkennungsmodul einen Speicher (13a) umfasst, der eine Tabelle speichert, in der die Koordinatendaten und Ortsdaten einen Bereich angeben, und die Ortsdaten liest, die den durch das GPS von der Tabelle erhaltenen Koordinatendaten entsprechen.

5. Adressenerkennungssystem nach Anspruch 2, **dadurch gekennzeichnet, dass** das Ortsdaten-Erzeugungsmodul Daten erzeugt, die gemäß einer Betriebseingabe einen Shop an einem Empfangspunkt des lieferbaren Objekts angeben.

6. Adressenerkennungssystem nach Anspruch 5, **dadurch gekennzeichnet, dass** das Ortsdaten-Erkennungsmodul einen Speicher (13b) umfasst, der eine Tabelle speichert, in welcher die Daten, die den Shop angeben und die Ortsdaten, die einen Bereich angeben, miteinander assoziiert sind, und die Ortsdaten liest, die den Daten von der Tabelle, die den Shop angeben, entsprechen.

7. Adressenerkennungssystem nach Anspruch 2, **dadurch gekennzeichnet, dass**
das Identifikationsdaten-Erzeugungsmodul die erzeugten Identifikationsdaten in einen eindimensionalen oder zweidimensionalen Code verwandelt und den verwandelten Code druckt, und
das Identifikationsdaten-Erhaltungsmodul den gedruckten Code liest und die Identifikationsdaten des lieferbaren Objekts erhält.

8. Adressenerkennungssystem nach Anspruch 2, **dadurch gekennzeichnet, dass**
das Identifikationsdaten-Erzeugungsmodul die erzeugten Identifikationsdaten in einem elektronischen Etikett speichert, und
das Identifikationsdaten-Erhaltungsmodul das elektronische Etikett liest und die Identifikationsdaten des lieferbaren Objekts erhält.

## Revendications

1. Appareil de reconnaissance d'adresse, **caractérisé en ce qu'**il comprend :
un module d'obtention de données d'identification (52) configuré pour obtenir des données d'identification d'un objet livrable;
un module de recherche (53) configuré pour rechercher dans un serveur connecté via un réseau ou dans un environnement local des données d'emplacement indiquant un emplacement où l'objet livrable est reçu, sur la base des données d'identification obtenues par le module d'obtention de données d'identification, les données d'emplacement étant associées aux données d'identification en tant que données d'enregistrement;
un module de mémoire de coefficient de correction (55) configuré pour stocker un coefficient de correction pour une zone associée aux données d'emplacement;
un module de changement de coefficient de correction (54) configuré pour diminuer le coefficient de correction dans le module de mémoire de coefficient de correction, qui est associé aux données d'emplacement où l'objet livrable est reçu ;
un module d'obtention d'image (56) configuré pour obtenir une image d'une région dans laquelle une adresse est écrite à partir de l'objet livrable;
un module de calcul de valeur d'évaluation (57) configuré pour extraire des candidats de ligne d'adresse de l'image et pour mettre en correspondance une pluralité de candidats de région d'adresse extraits avec une base de données d'adresses, en calculant ainsi une valeur d'évaluation pour chaque adresse candidate;
un module de correction de valeur d'évaluation (58) configuré pour corriger les valeurs d'évaluation avec des coefficients de correction, et pour calculer des valeurs d'évaluation corrigées par multiplication ou addition des valeurs d'évaluation avec les coefficients de correction pour la zone des adresses obtenues ; et
un module de reconnaissance (59) configuré pour reconnaître une adresse d'une destination de livraison de l'objet livrable, sur la base des valeurs d'évaluation corrigées par le module de correction de valeur d'évaluation.

2. Système de reconnaissance d'adresse **caractérisé en ce qu'**il comprend un terminal de réception (10) et l'appareil de reconnaissance d'adresse (50) selon la revendication 1, dans lequel
le terminal de réception comprend :
un module de génération de données d'identification (12) configuré pour générer des données d'identification pour chaque objet livrable ;
un module de génération de données d'emplacement (13) configuré pour générer des données d'emplacement indiquant une zone où l'objet livrable a été reçu ; et
un module d'enregistrement (14) configuré pour enregistrer, dans un serveur connecté via un réseau, les données d'identification générées par le module de génération de données d'identification et les données d'emplacement générées par le module de génération de données d'emplacement, avec les données d'identification et les données d'emplacement associées les unes aux autres.

3. Système de reconnaissance d'adresse selon la revendication 2, **caractérisé en ce que** le module de génération de données d'emplacement obtient des données de coordonnées spatiales par un système GPS.

4. Système de reconnaissance d'adresse selon la revendication 3, **caractérisé en ce que** le module de génération de données d'emplacement comprend une mémoire (13a) stockant une table dans laquelle les données de coordonnées et les données d'emplacement indiquent une zone, et lit les données d'emplacement correspondant aux données de coordonnées obtenues par le système GPS à partir de la table.

5. Système de reconnaissance d'adresse selon la revendication 2, **caractérisé en ce que** le module de génération de données d'emplacement génère des données indiquant une boutique à un point de réception de l'objet livrable, selon l'entrée d'une opération.

6. Système de reconnaissance d'adresse selon la revendication 5, **caractérisé en ce que** le module de génération de données d'emplacement comprend une mémoire (13b) stockant une table dans laquelle des données indiquant la boutique et des données d'emplacement indiquant une zone sont associées les unes aux autres, et lit les données d'emplacement correspondant aux données indiquant la boutique à partir de la table.

7. Système de reconnaissance d'adresse selon la revendication 2, **caractérisé en ce que**
le module de génération de données d'identification convertit les données d'identification générées en un code unidimensionnel ou bidimensionnel, et imprime le code converti, et
le module d'obtention de données d'identification lit le code imprimé, et obtient les données d'identification de l'objet livrable.

8. Système de reconnaissance d'adresse selon la revendication 2, **caractérisé en ce que**
le module de génération de données d'identification stocke les données d'identification générées dans une étiquette électronique, et
le module d'obtention de données d'identification lit l'étiquette électronique, et obtient les données d'identification de l'objet livrable.
